Europäisches Patentamt

European Patent Office

Office européen des brevets

(11) Veröffentlichungsnummer: **0 388 898**

A1

## (12) EUROPÄISCHE PATENTANMELDUNG

(21) Anmeldenummer: 90105260.5

(51) Int. Cl.5: **G05B 19/35, G05B 19/39**

(22) Anmeldetag: 20.03.90

(30) Priorität: 21.03.89 DE 3909206

(43) Veröffentlichungstag der Anmeldung:
26.09.90 Patentblatt 90/39

(84) Benannte Vertragsstaaten:
**CH DE FR GB LI**

(71) Anmelder: **BANDEMER, Adalbert**
**Skabiosenstrasse 9**
**D-8000 München 50(DE)**

(72) Erfinder: **BANDEMER, Adalbert**
**Skabiosenstrasse 9**
**D-8000 München 50(DE)**

(74) Vertreter: **Heim, Hans-Karl, Dipl.-Ing. et al**
**c/o Weber & Heim Hofbrunnstrasse 36**
**D-8000 München 71(DE)**

(54) **Anordnung zur Echtzeit-Positions-Regelung.**

(57) Die Erfindung betrifft eine Anordnung zur Echtzeit-Regelung der Position eines bewegbaren Objektes O im Nanometerbereich auf einer Verstelleinrichtung 2, mit einer elektronischen Regelschaltung und einem von ihr gesteuerten piezokeramischen Translator 1 als Stell- und Regelglied für das Objekt. Um Ungenauigkeiten durch Zwischenglieder auszuschließen, ist der Translator direkt mit dem Objekt gekoppelt. Weiterhin ist der Meßtaster in Art einer Brückenschaltung beschaltet, so daß ein sehr genauer Abgleich über den gesamten Meßbereich des Meßtasters mit einer nachfolgend sehr hohen Verstärkung im Regelkreis realisiert werden kann.

Fig. 3

EP 0 388 898 A1

## Anordnung zur Echtzeit-Positions-Regelung

Die Erfindung betrifft eine Anordnung zur Echtzeit-Regelung der Position eines auf einer Verstelleinrichtung bewegbaren Objektes im Nanometerbereich gemäß Oberbegriff des Anspruchs 1.

Eine vergleichbare Anordnung ist aus der DE-AS 23 13 107 bekannt. Bei dem in dieser Druckschrift beschriebenen Verfahren schlägt man zur Überwindung von Nachteilen bei der Steuerung von piezokeramischen Translatoren, wie sie z.B. durch die hysteresebehaftete Auslenkfunktion oder durch Nichtlinearitäten vorhanden sind, vor, zur zeitlich linearen Veränderung des Abstandes des Translators in einem ersten Zeitintervall einen konstanten Strom und in einem zweiten Zeitintervall den Entzug der gleichen Ladungsmenge durchzuführen. Mit welchen Stell- oder Regelgliedern die genaue Positionierung des Objekts durchgeführt wird, läßt diese Druckschrift jedoch offen.

Die exakte Positionierung eines Objekts im Nanometerbereich hat auf zahlreichen Gebieten der Forschung und Entwicklung erhöhte Bedeutung gewonnen. Beispielsweise bestimmt die präzise Anordnung optischer Komponenten die gesamte Qualität meist sehr komplexer Gesamtgeräte.

Hierfür kann die ultrafeine Positionierung in dem schmalen Bereich eines Brennpunktes aufgeführt werden, wie sie bei der Brechzahlprofilmessung an Lichtleitfasern durchgeführt wird. Auch zeitliche Vorgänge werden bei optischen Aufbauten beispielsweise durch optische Verzögerungsleitungen von räumlicher Positioniergenauigkeit beeinflußt. Auch beim Ätzen von Halbleitermaterialien mit einem Laserstrahl oder dem Lasertrimmen in der Dünnfilmtechnologie ist eine exakte Positionierung im Submikrometerbereich notwendig.

Die Qualitätskriterien derartiger Positionierungen sind die Größe des Positionierbereichs, die kleinste mögliche Schrittweite, die Reproduzierbarkeit und Stabilität der Positionierung und die Zeit, die zur Positionierung notwendig ist. Präzise Positionierungen können nur ferngesteuert ausgeführt werden, da Fremdeinflüsse und mechanische Verkoppelungen ausgeschlossen werden müssen. Die am Markt erhältlichen Positioniersysteme lassen sich im wesentlichen in drei Gruppen einteilen: In motorisierte Verstelleinheiten mit Schrittmotoren und in Verstelleinheiten mit Gleichstrommotoren sowie Verstelleinheiten mit Piezotranslatoren.

Schrittmotoren können in Halb- und Vollschritten bewegt werden, wobei typische Werte für einen Vollschritt 0,4 μm sind. Ein Nachteil bei der alleinigen Verwendung eines Schrittmotors ist die stoßweise Bewegung der Verstelleinheit, bei der Erschütterungen auf das übrige System übertragen werden.

Verstelleinheiten, die allein mit Gleichstrommotoren arbeiten, sind durch das mechanische Spiel der Kraftübersetzung und durch das Umkehrspiel des Übersetzungsgetriebes benachteiligt. Für eine exakte Ortsinformation muß notwendigerweise eine Strichcodescheibe verwendet werden. Die erreichbaren Positionsgenauigkeiten liegen hierbei im Mikrometerbereich.

Der Einsatz von Piezotranslatoren bietet die schnellste Positioniermöglichkeit, da hier die ausdehnung der piezo elektrischen Keramik, die die Wirkung einer Kapazität hat, nur vom Strom, der von der steuernden Quelle zur Verfügung gestellt werden kann, abhängt. Der Nachteil der Piezotranslatoren ist ihre Hysterese, das Kriechverhalten, die Lastabhängigkeit des Verstellweges und die Temperaturdrift.

Die vorhandenen Positioniersysteme haben gemeinsam den Nachteil, daß der Ist-Wert der Position entweder gar nicht oder nur am Stellelement selbst, z.B. am Inkrementalgeber auf der Achse des Gleichstrommotors, gemessen wird. Die tatsächliche Position des zu verstellenden Objektes wird nicht gemessen, obwohl im betrachteten Submikrometerbereich räumliche Differenzen durch Temperatur, Luftzug, mechanische Spannungen und Verkoppelungen u.a. auftreten.

Ein weiterer wesentlicher Nachteil ist unmittelbar damit verbunden. Da die Positionierung optischer Komponenten meist mehrere Achsen, typischerweise drei Achsen, betrifft, können auftretende Relativbewegungen der zu verstellenden Objekte bei Positionierung in einer Achse für die anderen Achsen nicht mit erfaßt und berücksichtigt werden. Auch liegen die aufgeführten Positioniersysteme mit ihren Positionierzeiten im Bereich mehrerer Sekunden, was meßtechnisch verbesserungsbedürftig ist.

Ausgehend von diesen Nachteilen bei der eingangs genannten Anordnung liegt der Erfindung die Aufgabe zugrunde, eine gattungsgemäße Anordnung zur Echtzeitregelung der Position eines Objektes im Nanometerbereich mit einem fehlerreduzierenden, einfachen Aufbau, insbesondere in mechanischer und elektronischer Hinsicht, auszulegen.

Zur Lösung dieser Aufgabe sieht die Erfindung die Merkmale gemäß kennzeichnendem Teil des Anspruchs 1 vor.

Ein wesentlicher Gedanke der Erfindung kann daher darin gesehen werden, den entsprechenden Wegmeßtaster direkt die Position des Objekts am Objekt abtasten zu lassen, so daß Übertragungsfehler, wie sie gerade durch Servoverstärker, Servomotoren, etc. herrühren, bei der erfindungsgemäßen Anordnung überhaupt nicht auftreten können. Darüber hinaus ist eine direkte Fixierung des Wegmeßtasters an der Verstelleinrichtung vorgesehen. Dies stellt sicher, daß geringste relative Verschiebungen des Objekts präzis vom Wegmeßtaster aufgenommen werden. Eine weitere wesentliche Maßnahme ist die Beschaltung des Wegmeßtasters nach dem Prinzip einer Meßbrücke, so daß in einfacher Weise auf eine Nullposition abgeglichen werden kann.

Der Aufbau eines derartigen Wegmeßtasters mit z.B. einer Primärwicklung und ausgangsseitig zwei Sekundärwicklungen ist im allgemeinen bekannt, wobei hier insbesondere das Transformator- oder das Halbbrückenprinzip für translatorische Bewegungen bzw. RVDT's für rotatorische Bewegungen bekannt sind. Der Mittelabgriff zwischen diesen Sekundärwicklungen wird zweckmäßigerweise über einen Widerstand auf einen Knotenpunkt gelegt, an dem sowohl die obere Sekundärwicklung über einen weiteren Widerstand als auch die untere Sekundärwicklung über zwei parallel geschaltete variable Widerstände liegt. Diese zwei variablen Widerstände verkörpern die nachstehend noch näher erläuterten Digital-Analog-Wandler gemäß der Figur. Aufgrund dieses Brückenprinzips kann über den gesamten Meßbereich des Meßtasters sehr empfindlich auf "Null" abgestimmt werden. Durch das am Knotenpunkt in der Regel erreichbare kleine Fehlersignal kann nachfolgend eine sehr hohe Verstärkung durchgeführt werden, so daß sehr präzise Abweichungen vom Nullpunkt ermittelt werden können.

Um größere Verstellwege im Rahmen einer Echtzeit-Nachführung realisieren zu können, bedient sich die Erfindung einer Aufteilung des gesamten Stellweges in eine Grobverstellung und eine Feinverstellung. Die Grobverstellung wird vorzugsweise durch die Verschiebung mittels eines Motors, insbesondere eines Gleichstrommotors oder eines Schrittmotors realisiert. Auf diese Weise kann die Grobeinstellung in kürzester Zeit durchgeführt werden, woran sich dann die ruckfreie, kontinuierliche Feineinstellung mittels eines piezokeramischen Translators als Stellglied anschließt.

Zweckmäßigerweise ist hierfür der Translator mit dem Motor so gekoppelt, daß der Translator bei der Grobeinstellung selbst mitverschoben wird und seine Auslenkung erst im Rahmen der Feineinstellung erfolgt. Auf diese Weise lassen sich größere Verstellwege rasch überbrücken und trotzdem über die Feineinstellung die hohe Genauigkeit der Positionierung des Objekts erreichen.

Die erfindungsgemäße Anordnung umfaßt vorteilhafterweise auch eine Übersetzungseinrichtung, die direkt mit dem Objekt in Verbindung steht, wodurch die Möglichkeit geschaffen wird,· mit einem piezokeramischen Translator auch grössere Stellwege zu realisieren.

Die Regelschaltung umfaßt des weiteren eine Recheneinheit, die primär für die Eingabe der Soll-Position des Objekts bestimmt ist. Diese Recheneinheit dient jedoch auch dazu, Nichtlinearitäten des Wegmeßtasters zu korrigieren. Weitere Korrektureingriffe, beispielsweise im Hinblick auf die Temperaturabhängigkeit des Ausgangssignals des Wegmeßtasters sind ebenfalls darüber lösbar.

Die Erfindung schafft daher eine Anordnung, bei der die Positionierung eines Objektes auch in mehreren Achsen kontrolliert und reproduzierbar auf Nanometer genaue in Echtzeit durchgeführt werden kann, wobei Komponenten des Systems mit der Verstelleinheit mechanisch fest verbunden sind.

Vorteilhafte Weiterbildungen der Erfindung sind in den Unteransprüchen beansprucht.

Mit der Anordnung sind schnelle Positioniervorgänge innerhalb einiger Millisekunden möglich. Die Positionierzeit wird von der verwendeten Steuerfrequenz für den Meßtaster und eventuell austretenden mechanischen Deformationen der Verstelleinheit begrenzt. Die gewählte Position wird anschließend durch die Regelung auf einige Nanometer genau beibehalten, wobei die analoge Arbeitsweise des Meßtasters diese sehr empfindliche Weglängenmessung ermöglicht.

Einflüsse, wie Langzeitdrift, mechanische Verkoppelung mehrerer Achsen oder die Temperaturdrift und das Kriechverhalten des Piezotranslators werden damit erfaßt und ausgeregelt. Durch die Trennung in grober Voreinstellung und geregelter Feineinstellung für einen kleineren Bereich wird die Ausregelung von Erschütterungseinflüssen oder ähnlichen Einflüssen schnell durchgeführt. Durch die Regelung aller Achsen innerhalb eines komplexen mechanischen Systems können keine Dejustierungen mehr stattfinden und der mechanische Aufbau wird elektronisch selbstjustierend. Dadurch werden geringere Anforderungen an die Steifigkeit der optischen Aufbauten gestellt.

In der Anordnung können als Stellelemente Hoch- oder Niedervolt-Piezotranslatoren mit unterschiedlichsten Bauformen Anwendung finden. Als Meßwertaufnehmer für die Position sind induktive oder kapazitive Meßtaster einsetzbar. Die zu regelnden Freiheitsgrade können translatori scher oder rotatorischer Art sein. Die grobe Voreinstellung des Stellgliedes und die Erzeugung des Sollwerts der gewünschten Position können in verschiedener Weise realisiert werden.

Im nachfolgenden wird zunächst das bisher realisierte Prinzip und anschließend die Erfindung im wesentlichen anhand eines schematischen Ausführungsbeispiels näher beschrieben. Dabei zeigen:

Fig. 1 ein Blockschaltbild zur Signalverarbeitung eines Meßtasters nach dem Stand der Technik;

Fig. 2 zur Verdeutlichung im Vergleich zum Blockschaltbild nach Fig. 1 ein Blockschaltbild des Regelungsprinzips entsprechend der Erfindung;

Fig. 3 den schaltungstechnischen Aufbau einer erfindungsgemäßen Anordnung im wesentlichen als Blockschaltbild und

Fig. 4 eine Präzisierung des Blockschaltbildes nach Fig. 3, insbesondere im Hinblick auf die Beschaltung des Wegmeßtasters nach dem Prinzip einer Meßbrücke.

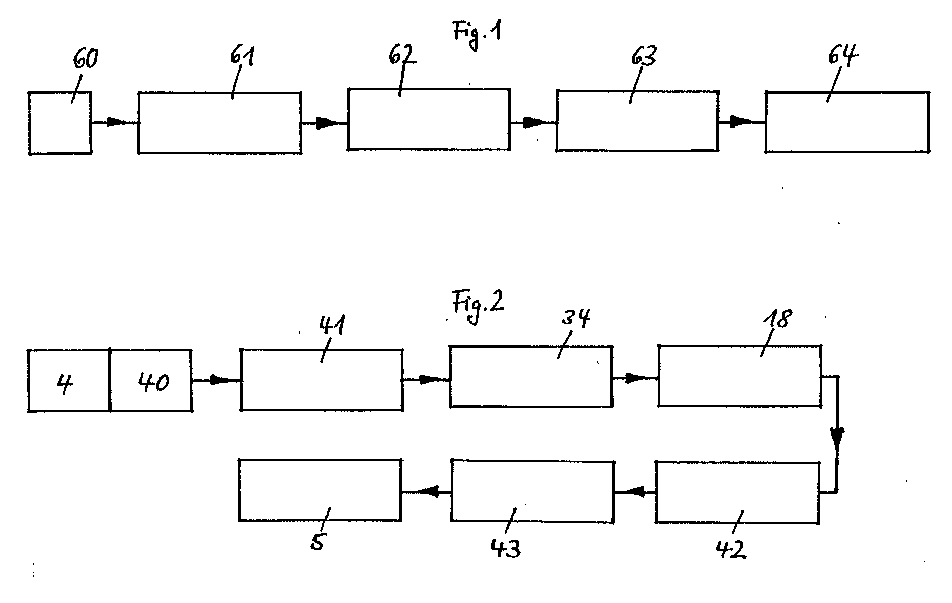

In Fig. 1 ist die bei Wegmeßtastern bisher bekannte Signalverarbeitung schematisch mittels eines Blockschaltbildes dargestellt. Das Ausgangssignal des Wegmeßtasters 60 wird hierbei auf einen Gleichrichterblock 61 mit phasenempfindlicher Gleichrichtung gegeben. Von dort aus wird das elektrische Signal normalerweise einem Block 62 zugeführt, der als Filter vierter Ordnung ausgelegt ist. Bereits durch diesen Block 62, der üblicherweise relativ langsam arbeitet, ist eine Echtzeitregelung in dem gewünschten Nanobereich kaum mehr realisierbar. Erst recht trifft dies dann zu, wenn das Ausgangssignal des Blocks 62 einem Verstärkungsblock 63 zugeführt ist, in dem sich aufgrund der Verstärkung vor allen Dingen Triftungenauigkeiten, Temperaturabweichungen etc. bemerkbar machen. Das am Ausgang des Verstärkungsblockes 63 angeordnete Ausgangssignal wird dann üblicherweise einem Anzeigeblock 64 zugeleitet, an dessen Ausgang das IST-Signal z.B. einer PID-Regelung zugeführt wird.

Da entsprechend dieser herkömmlichen Signalverarbeitung das IST-Signal sehr stark fehlerbehaftet ist und zudem sich durch den Filterblock 62 nur eine langsame Verarbeitung ermöglichen läßt, sind hier eklatante Nachteile im zeitlichen Verhalten und bei Triftparametern vorhanden, die in einer präzisen Echtzeitregelung nicht hingenommen werden können.

Das erfindungsgemäße Prinzip der Signalverarbeitung bis zu einem ein- oder mehrkreisigen PID-Regler ist daher als Blockschaltbild in Fig. 2 dargestellt.

Ein Meßtaster 4 liefert hierbei an seinem Mittelabgriff 40 den IST-Wert. Dieser IST-Wert wird einem Vergleicherblock 41 zum Vergleich mit dem SOLL-Wert zugeführt. Da die Beschaltung des Meßtasters 4 im Sinne einer Meßbrücke am Ausgang bzw. als Ausgangssignal der Meßbrücke üblicherweise ein sehr kleines Fehlersignal liefert, ist der nachfolgende Verstärkungsblock 34 mit einer sehr hohen Verstärkung ausgelegt. Die Verstärkung kann hierbei ein Mehrfaches von Tausend betragen. Dies bedeutet jedoch, daß auch kleinste Abweichungen beim IST-/SOLL-Vergleich aufgrund der hohen nachfolgenden Verstärkung sehr genau erfaßt werden und damit auch eine entsprechende Nachregelung mit höchster Präzision möglich ist. Das Ausgangssignal des Verstärkungsblocks 34 wird anschließend einem Block 18 zur phasenempfindlichen Gleichrichtung und nachfolgend einem Integrator-Block 42 zuge führt. Zur weiteren Verarbeitung des Signals wird das Signal am Ausgang des Integrator-Blocks 42 auf einen Filterblock 43 mit einer Filtercharakteristik z.B. zweiter Ordnung gegeben, wobei das derart gefilterte Signal einem PID-Regler 5 zugeführt ist.

Der Integrator-Block 42 und der nachfolgende Filterblock 43 bringen den Vorteil einer äußerst schnellen Signalverarbeitung, wobei über die Integration noch eine weitgehende Triftfreiheit gewährleistet ist.

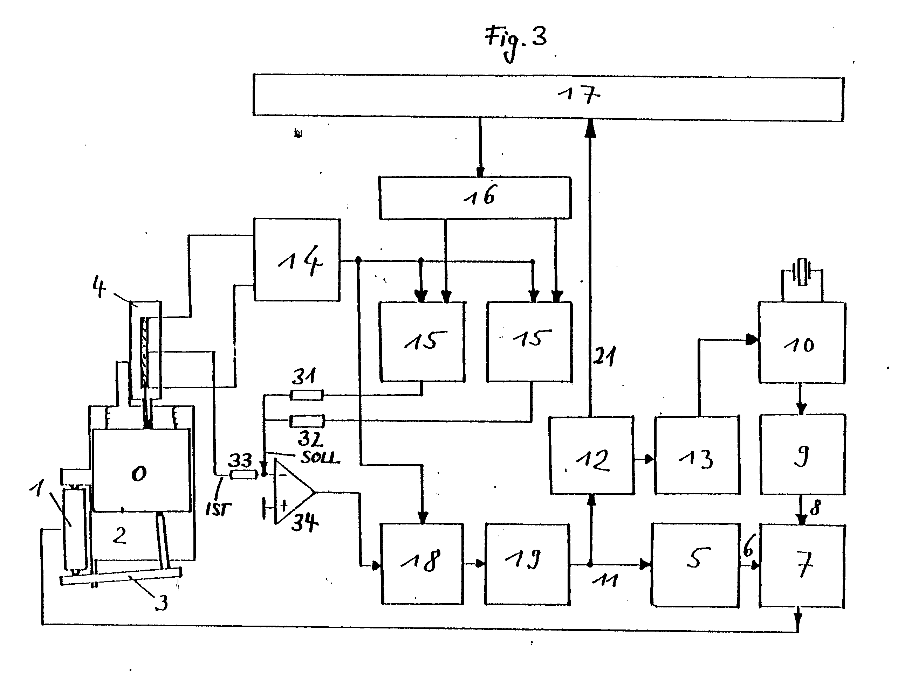

Eine genauere Darstellung der erfindungsgemäßen Anordnung für eine translatorische Lageregelung ist nachstehend anhand der Fig. 3 beschrieben. In diesem Blockschaltbild nach Fig. 3 ist als Stellglied ein aus einem piezokeramischen Material aufgebauter Translator 1 verwendet. Zur Vergrößerung seines Stellwegs wird an dem Verstelltisch 2 eine Hebelübersetzung 3 vorgesehen, an deren Stelle auch ein Motor, insbesondere ein Gleichstrommotor oder ein Schrittmotor, zur Vergrößerung des relativ geringen Stellweges eines Piezo-Translators ohne Hebelübersetzung treten kann. Als Meßwertaufnehmer wird ein axialer Meßwerttaster 4 eingesetzt, der fest mit dem Verstelltisch 2 verbunden ist und die exakte Position des zu verstellenden Objektes O mißt.

Diese Verstelleinheit kann durch geeignete Kombination jeweils mehrerer derartiger eindimensionaler Einheiten zu einem Verstellsystem mit mehreren Dimensionen für Translation und Rotation erweitert werden. Die Figur stellt schematisch den funktionellen Zusammenhang für die Anordnung bei der Positionierung eines einzigen Freiheitsgrades dar.

Von der räumlich trennbaren elektronischen Regelschaltung wird die von dem jeweiligen Meßtaster 4 empfangene analoge Ortsinformation einer PID-Reglereinheit 5 zugeführt, die die Feinregelung 6 übernimmt. Eine Verstärkungseinheit 7 steuert den Piezo-Translator 1 vorzeichenrichtig an. Die Grobeinstellung 8 wird dem Signal der Feinregelung überlagert und z.B. durch die An steuerung eines DA-Wandlers 9 mit einem Vor- und Rückwärtszähler 10 erzeugt. Der Zähler 10 wird durch das Regelsignal 11, das einem Komparatorblock 12 und einer Dekodierlogik 13 zugeführt wird, gesteuert. Das Regelsignal 11 wird durch Ansteuerung des Meßtasters 4 mit einem Wechselspannungsgenerator 14 erzeugt. Gleichzeitig dient das Ausgangssignal des Generators 14 zur Erhöhung der Positionsgenauigkeit als Referenzsignal für zwei parallel geschaltete DA-Wandler 15, die auf geringen Phasenfehler bei der Frequenz des Generators 14 selektiert werden.

Mit den parallel arbeitenden DA-Wandlern 15 wird über einen Multiplexer-Baustein 16 vom steuernden Rechner 17 der Sollwert der Position vorgegeben. Die parallel arbeitenden DA-Wandler 15 erzeugen eine sehr hohe Auflösung für die anzufahrende Position, so daß Nichtlinearitäten an den Bereichsgrenzen des Meßtasters 4 durch entsprechende Korrekturen im Rechner 17 ausgeglichen werden können.

Der Meßtaster 4 wird nach dem Meßbrückenprinzip beschaltet, so daß nach phasenempfindlicher Detektion 18 und einer Differenzstufe 19 für die Regelung des Piezo-Translators 1 über die gesamte meßbare Weglänge sehr genau auf Null abgeglichen werden kann. Der Mittelabgriff 40 des Meßtasters 4, an dem das Ist-Signal liegt, wird über einen Widerstand 33 auf einen Verstärker 34 gegeben. Gleichzeitig werden auf diesen Verstärkereingang die Ausgangsleitungen der DA-Wandler 15 über Widerstände 31,32 geführt, wobei an letzteren das Soll-Signal anliegt. Das Ausgangssignal des Verstärkers 34 wird der phasenempfindlichen Detektion 18 zugeführt.

Die Information über eine fehlerhafte Position des zu verstellenden Objekts erhält der Rechner 17 über den Meßtaster 4 und einen Komparatorblock 12 über eine Datenleitung 21. Dadurch können Erschütterungen der Verstelleinheit, Vibrationen und Luftzugeinflüsse, Temperaturdriften der Mechanik etc. festgestellt und Meßfolgen, die nur bei exakter Positionierung durchgeführt werden sollen, unterbrochen werden.

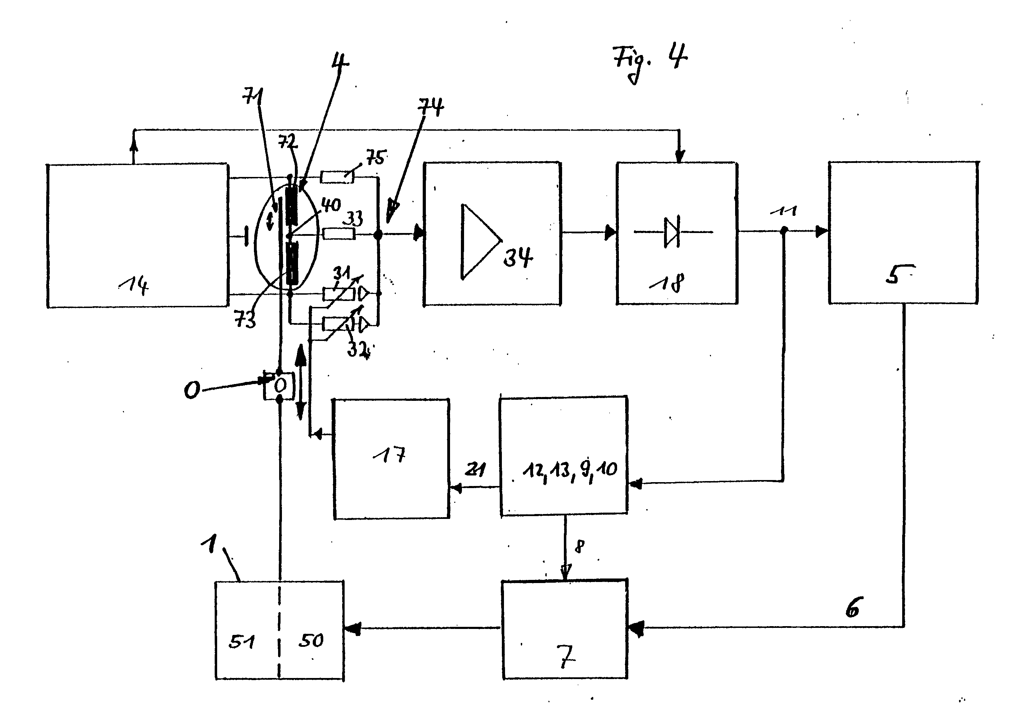

Das Blockschaltbild nach Fig. 3 ist in Fig. 4 in etwas geänderter Form, jedoch mit größerem Detail im Hinblick auf die Beschaltung des Meßtasters 4 nach dem Prinzip einer Meßbrücke näher dargestellt.

Der Meßtaster 4 weist im wesentlichen einen Anker 71 auf, der axial verschiebbar ist und fest am zu positionierenden Objekt "0" fixiert ist oder mit einer Feder fest angedrückt wird. Der Meßtaster 4 besteht üblicherweise aus einer in Fig. 4 nicht gezeigten Primärwicklung (Transformator- oder RVDT-Prinzip) und ausgangsseitig zwei Sekundärwicklungen 72,73 (Halbbrücken- oder Drossel-Prinzip). Der Mittelabgriff 40 zwischen den Sekundärwicklungen 72,73 ist über einen Widerstand 33 auf einen Knotenpunkt gelegt, der als Vergleichsstelle 74 dient. An dieser Vergleichsstelle 74 liegen weiterhin die obere Sekundärwicklung 72 über einen Widerstand 75 und die untere Sekundärwicklung 73 über zwei parallel geschaltete variable Widerstände 31 und 32. Diese variablen Widerstände 31 und 32 verkörpern die Digital-Analog-Wandler 15 gemäß Fig. 3. Mit dem Widerstand 75 kann eine absolute "Null-position" des Meßtasters 4 definiert werden.

Die Regelung und Beschaltung des Meßtasters 4 nach dem Meßbrückenprinzip beinhaltet daher, daß das Signal an der Vergleichsstelle 74 bei einem Abgleich "0" ist. Dies bedeutet, daß der IST-Wert den SOLL-Wert der gewünschten Position erreicht hat.

Aufgrund des bei der Erfindung realisierten Schaltungsprinzips der Meßbrücke und des an der Vergleichsstelle 74 in der Regel erreichbaren kleinen Fehlersignals kann nachfolgend eine hohe Verstärkung im Verstärkungsblock 34 von z.B. V = 5000 durchgeführt werden.

Wie in Fig. 3 dargestellt, erfolgt auch in Fig. 4 eine weitere Signalverarbeitung über einen Block 18 mit phasenempfindlicher Gleichrichtung. Das Regelsignal 11 wird daraus einerseits einem PID-Regler 5 zugeführt und andererseits der eigentlichen Signalverarbeitung mit den Blöcken 9,10,12,13. Die Verstärkungseinheit 7 erhält dabei sowohl vom PID-Regler 5 das Signal für die Feineinstellung und von den Blöcken der Signalverarbeitung das Signal 8 für die Grobeinstellung.

Die Verstärkungseinheit 7 leitet dementsprechend dem Stellglied 1 ein Signal zu, das aus einem Grobsignal und aus einem Feinsignal besteht. Da das Stellglied 1 vorzugsweise in einer Einheit mit Grobeinstellung, insbesondere einer Motoreinheit 50 und einer Einheit für die Feineinstellung, nämlich einem piezokeramischen Translator 51 aufgeteilt ist, lassen sich hierüber größere Verstellwege sehr rasch bewältigen, wobei jedoch die Feineinstellung im Nanometerbereich erhalten bleibt. Das Stellglied 1 ist nämlich erfindungsgemäß direkt oder indirekt, z.B. mittels einer Feder mit dem Objekt O verbunden.

Zur Vervollständigung sei erwähnt, daß die Blöcke der Signalverarbeitung 9,10,12,13 an ihrem Ausgang über die Datenleitung 21 ein entsprechendes Signal dem Rechner 17 zuführen, an dessen Ausgang das SOLL-Signal den Wandlern 15 bzw. den variablen Widerständen 31 und 32 zugeleitet wird.

Der Meßtaster 4 selbst liegt eingangsseitig an einem Generator 14 zur Erzeugung der Wechselspannung, wobei das Generatorsignal ebenfalls den Gleichrichterblock 18 zur phasenempfindlichen Gleichrichtung beeinflußt.

## Ansprüche

1. Anordnung zur Echtzeit-Regelung der Position eines bewegbaren Objekts im Nanometerbereich auf einer Verstelleinrichtung, mit einer elektronischen Regelschaltung und einem von ihr gesteuerten piezokerami-Translator als Stell- und Regelglied für das Objekt,

dadurch **gekennzeichnet,**

daß mindestens ein Wegmeßtaster (4) zur eindimensionalen direkten Erfassung der IST-Position des Objekts (0) als Meßgröße vorgesehen ist,

daß der Wegmeßtaster (4) im Hinblick auf einen Null-Positionsabgleich nach dem Prinzip einer Meßbrücke (15,31,32,33) beschaltet und an der Verstelleinrichtung (2) fixiert ist,

daß eine mit dem Objekt (0) in Verbindung stehende Übersetzungseinrichtung (3) zur Vergrößerung des Stellwegs des Stellglieds (1) vorgesehen ist und daß die Regelschaltung eine Recheneinheit (17) für die Eingabe der SOLL-Position des Objekts (0) und mindestens für die Korrektur von Nichtlinearitäten des Wegmeßtasters (4), sowie die Meßbrücke (31,32,33) des Wegmeßtasters (4) und einen Rückführblock (5,7) für das Regelsignal (11) auf das Stellglied (1) aufweist.

2. Anordnung nach Anspruch 1,
dadurch **gekennzeichnet,**

daß zur Grobverstellung und Vergrößerung des Stellwegs des Stellgliedes (1) ein auf die Verstelleinrichtung (2) einwirkender Motor (50), insbesondere ein Gleichstrommotor oder Schrittmotor, vorgesehen ist, dem funktionell für die Feineinstellung der piezokeramische Translätor (1) zugeordnet ist.

3. Anordnung nach Anspruch 1,
dadurch **gekennzeichnet,**

daß die Übersetzungseinrichtung (3) zur Vergrößerung des Stellwegs des Stellglieds (1) eine an der Verstelleinrichtung (2) angebrachte Hebelübersetzung ist, wobei der Drehpunkt des Hebelarms mit der Verstelleinrichtung (2) verbunden ist.

4. Anordnung nach einem der Ansprüche 1 bis 3,
dadurch **gekennzeichnet,**

daß die Beschaltung des Wegmeßtasters (4) mit der Meßbrücke einen Ausgang (74) für den 0-Positions-abgleich aufweist, wobei das am Ausgang anstehende Signal einer hohen Verstärkung (34) zugeführt ist.

5. Anordnung nach einem der Ansprüche 1 bis 4,
dadurch **gekennzeichnet,**

daß für eine n-dimensionale Erfassung der IST-Position des Objekts (0) n Wegmeßtaster (4) für translatorische oder rotatorische Freiheitsgrade vorgesehen sind, die unabhängig voneinander geregelt sind.

6. Anordnung nach einem der Ansprüche 1 bis 5,
dadurch **gekennzeichnet,**

daß der oder die Wegmeßtaster (4) induktiv oder kapazitiv ausgelegt sind/ist und bei Translationsregelung eine rein axiale Empfindlichkeit, bei Rotationsregelung eine reine Winkelempfindlichkeit aufweist.

7. Anordnung nach einem der Ansprüche 1 bis 6,
dadurch **gekennzeichnet,**

daß der Rückführblock (5,7) für das Regelsignal (11) eine einkreisige oder mehrkreisige PID-Regelung aufweist.

8. Anordnung nach einem der Ansprüche 1 bis 7,
dadurch **gekennzeichnet,**

daß eine mit dem Regelsignal (11) synchronisierbare weitere Steuerspannung für das Stellglied (1) zu dessen grober Voreinstellung vorhanden ist.

Fig.1

Fig.2

Fig.3

Fig. 4

EP 0 388 898 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-264147 (HITACHI CONSTRUCTION MACHINERY)<br>* Seite 2, Zeile 6 - Seite 2, Zeile 34 *<br>* Seite 11, Zeile 10 - Seite 11, Zeile 38 *<br>* Seite 26, Zeile 1 - Seite 26, Zeile 25 *<br>* Seite 31, Zeile 28 - Seite 31, Zeile 31 *<br>* Figuren 8A, 8B, 21, 28 *<br>* Figur 30 * | 1 | G05B19/35<br>G05B19/39 |
| A | | 5-7 | |
| Y | DE-A-3207068 (KALTENBACH & VOIGT)<br>* Seite 8, Zeile 28 - Seite 12, Zeile 6 *<br>* Figur 1 * | 1 | |
| A | | 4 | |
| A | FR-A-2098524 (THOMSON-CSF)<br>* Seite 3, Zeile 10 - Seite 3, Zeile 22 *<br>* Seite 5, Zeile 33 - Seite 7, Zeile 8 *<br>* Figuren 1, 2 *<br>--- | 1, 2, 5, 8 | |
| A | IEEE ELECTRO<br>vol. 7, Mai 1982, NEW YORK,USA<br>Seiten 1 - 8; Les Hadley et al:<br>"A MICROPROZESSOR-BASED SERVO-LOOP FOR LINEAR POSITION CONTROL"<br>* Seite 1, Absatz 1 - Seite 4, Absatz 3 * | 1, 3, 6, 7 | **RECHERCHIERTE SACHGEBIETE (Int. Cl.5 )**<br><br>G05B<br>B23Q |

Der vorliegende Recherchenbericht wurde für alle Patentansprüche erstellt

| Recherchenort | Abschlußdatum der Recherche | Prüfer |
|---|---|---|
| DEN HAAG | 18 JUNI 1990 | NETTESHEIM J. |